(19) Europäisches Patentamt
European Patent Office
Office européen des brevets

(11) **EP 3 066 445 B1**

(12) **FASCICULE DE BREVET EUROPEEN**

(45) Date de publication et mention
de la délivrance du brevet:
**16.10.2024 Bulletin 2024/42**

(51) Classification Internationale des Brevets (IPC):
**G01M 15/05** (2006.01) **F02K 9/00** (2006.01)
**F02K 9/96** (2006.01)

(21) Numéro de dépôt: **14805997.5**

(52) Classification Coopérative des Brevets (CPC):
**F02K 9/96; F02K 9/00; G01M 15/05;**
F05D 2260/80; F05D 2260/83

(22) Date de dépôt: **30.10.2014**

(86) Numéro de dépôt international:
**PCT/FR2014/052767**

(87) Numéro de publication internationale:
**WO 2015/067878 (14.05.2015 Gazette 2015/19)**

(54) **PROCÉDÉ D'ESSAI TECHNIQUE**

TECHNISCHES TESTVERFAHREN

TECHNICAL TESTING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.11.2013 FR 1360839**

(43) Date de publication de la demande:
**14.09.2016 Bulletin 2016/37**

(73) Titulaire: **Safran Aircraft Engines
75015 Paris (FR)**

(72) Inventeurs:
• **LE GONIDEC, Serge
27200 Vernon (FR)**
• **REICHSTADT, Sébastien
92600 Asnieres/Seine (FR)**

(74) Mandataire: **Cabinet Beau de Loménie
158, rue de l'Université
75340 Paris Cedex 07 (FR)**

(56) Documents cités:
**DE-A1- 102008 059 224 FR-A1- 2 751 410
FR-A1- 2 965 915**

**Description**

Arrière-plan de l'invention

La présente invention concerne un procédé d'essai technique d'un moteur comprenant au moins un palier de fonctionnement du dispositif correspondant à une valeur stable d'au moins une consigne de fonctionnement du moteur et/ou d'un banc d'essai du moteur.

Dans le domaine des essais techniques, il est courant d'essayer un dispositif à plusieurs régimes de fonctionnement différents pouvant être rencontrés pendant son utilisation, et ceci afin de caractériser l'ensemble du domaine de fonctionnement du dispositif de la manière la plus complète possible. Typiquement ceci est mis en oeuvre en suivant, pendant l'essai, une séquence de plusieurs paliers de fonctionnement, chaque palier de fonctionnement étant maintenu pendant une durée de temps prédéterminée ayant été considérée suffisante pour garantir la qualité des informations concernant des paramètres de fonctionnement du dispositif qui sont obtenues pendant la durée de ce palier.

Un tel procédé d'essai technique est divulgué, pour les essais techniques de moteurs, dans la publication de demande de brevet français FR 2 751 410 A1.

Toutefois, suivre une telle séquence de paliers de fonctionnement à durée prédéterminée peut résulter en une durée globale considérable des essais. Or, pour des raisons principalement économiques il est souhaitable de limiter cette durée globale des essais. En outre, l'ajustement de la durée individuelle de chaque palier de fonctionnement permettrait d'essayer un plus grand nombre de valeurs des consignes de fonctionnement, permettant ainsi une caractérisation plus complète du domaine de fonctionnement du dispositif soumis à l'essai.

Objet et résumé de l'invention

Le procédé d'essai technique décrit dans la présente divulgation vise à remédier à ces inconvénients. En particulier, cette divulgation vise à proposer un procédé d'essai technique qui permette de réduire la durée globale d'un essai technique et/ou d'augmenter le nombre de paliers dans une séquence de paliers de fonctionnement du moteur essayé, tout en maintenant la validité de l'essai.

Dans au moins un mode de réalisation, ce but est atteint grâce au fait que, dans l'essai technique, qui comprend au moins un palier de fonctionnement correspondant à une valeur stable d'au moins une consigne de fonctionnement du moteur et/ou d'un banc d'essai du moteur, ledit palier de fonctionnement est finalisé avant un seuil de durée maximum si un critère associé à un ensemble de paramètres physiques captés sur le moteur pendant le palier de fonctionnement est rempli et un niveau de confiance associé audit ensemble de paramètres physiques atteint au moins un seuil prédéterminé. Cette deuxième condition permet de distinguer les situations dans lesquelles le critère est suffisamment fiable pour permettre de juger l'opportunité de finaliser le palier de fonctionnement et celles dans lesquelles le critère n'est pas fiable, et ne permettrait donc pas d'abréger le palier de fonctionnement même s'il était rempli. En particulier, une condition supplémentaire pour finaliser ledit palier de fonctionnement avant un seuil de durée maximum peut être que ledit critère soit rempli, et ledit niveau de confiance atteigne au moins ledit seuil prédéterminé, pendant au moins une durée minimale prédéterminée, afin d'éviter qu'une fluctuation passagère d'un paramètre physique dudit ensemble ne puisse déclencher une interruption prématurée du palier de fonctionnement.

Ledit ensemble de paramètres physiques comprend une pluralité de paramètres physiques associés chacun à un niveau de confiance, le niveau de confiance associé à l'ensemble de paramètres physiques étant une fonction des niveaux de confiance associés à ladite pluralité de paramètres physiques. Ainsi, la fiabilité de chacun des paramètres physiques pourra être pondérée suivant l'importance du paramètre physique correspondant dans le calcul du niveau de confiance associé à la pluralité des paramètres physiques et autorisant le passage au palier de fonctionnement suivant. Par exemple, la fonction peut comprendre un produit des niveaux de confiance associés à deux paramètres physiques de ladite pluralité et/ou une soustraction du produit des niveaux de confiance associés à deux paramètres physiques de ladite pluralité à une somme des mêmes deux niveaux de confiance. En logique floue, le produit de deux valeurs de vérité correspond à l'opérateur t-norme probabiliste, tandis que la soustraction du produit de deux valeurs de vérité à une somme des mêmes deux valeurs de vérité correspond à un opérateur t-conorme probabiliste.

Afin d'adapter le niveau de confiance correspondant à chaque paramètre physique aux informations disponibles concernant la fiabilité de ce paramètre physique, ce niveau de confiance peut notamment être prédéterminé, ou calculé en fonction d'un niveau de bruit et/ou coefficient d'asymétrie dans un signal correspondant au paramètre physique associé pendant une fenêtre temporelle glissante et/ou d'une différence entre une valeur du paramètre physique associé et un seuil prédéterminé.

Afin de pouvoir appliquer des principes de logique floue au traitement des niveaux de confiance, chacun desdits niveaux de confiance peut avoir une valeur entre 0 et 1.

Afin de pouvoir essayer le dispositif à plusieurs régimes de fonctionnement différents, le procédé peut comprendre une séquence d'une pluralité de paliers de fonctionnement différents correspondant chacun à une valeur stable d'au moins une consigne de fonctionnement d'un moteur soumis à l'essai et/ou d'un banc d'essai du moteur. L'ordre des paliers de fonctionnement dans ladite séquence peut être établi sur base au moins d'une priorité assignée à chaque palier de fonctionnement, et des valeurs de l'au moins une consigne de fonctionnement correspondant à la pluralité de paliers de fonctionnement. L'ordre des paliers de fonctionnement peut être modifié, à partir de critères pré-définis, selon l'évolution du dispositif soumis à l'essai technique.

Le moteur soumis à l'essai technique peut notamment être un moteur-fusée à ergols liquides et plus spécifiquement un moteur-fusée à ergols liquides comprenant un système d'alimentation par turbopompe.

La présente invention se rapporte aussi à une unité électronique de commande avec au moins une sortie de données pour transmettre au moins une consigne de fonctionnement à un moteur et/ou à un banc d'essais dudit moteur, configurée pour commander un essai technique du dispositif suivant le procédé susmentionné. Cette configuration peut être une configuration physique d'au moins un circuit électronique de l'unité électronique de commande, ou peut être implémentée, dans une unité électronique de commande programmable, par un logiciel, c'est-à-dire un ensemble d'instructions exécutables par un système informatique pour effectuer un procédé d'essai technique. Un tel ensemble d'instructions peut être contenu dans un support informatique. On entend par « support informatique » tout dispositif de stockage de données pouvant être lu par un système informatique. Un tel support informatique peut notamment être un dispositif de stockage magnétique de données, tel qu'un disque ou bande magnétique, un dispositif de stockage optique de données, tel qu'un disque optique, ou un dispositif de stockage électronique de données, tel qu'une mémoire électronique volatile ou non-volatile.

Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :

- la figure 1 illustre schématiquement un moteur-fusée à propergols liquides et alimentation par turbopompes dans un banc d'essais comprenant une unité de commande électronique suivant un mode de réalisation de la présente invention ;
- la figure 2 illustre schématiquement les six principales fonctions d'un procédé d'essais techniques suivant un mode de réalisation de l'invention ;
- la figure 3A est un graphique illustrant le niveau de confiance attribué à un signal en fonction de la dispersion du bruit dans ce signal dans une fenêtre temporelle glissante ; et
- la figure 3B est un graphique Illustrant le niveau de confiance attribué à un signal en fonction de son coefficient d'asymétrie dans une fenêtre temporelle glissante.

Description détaillée de l'invention

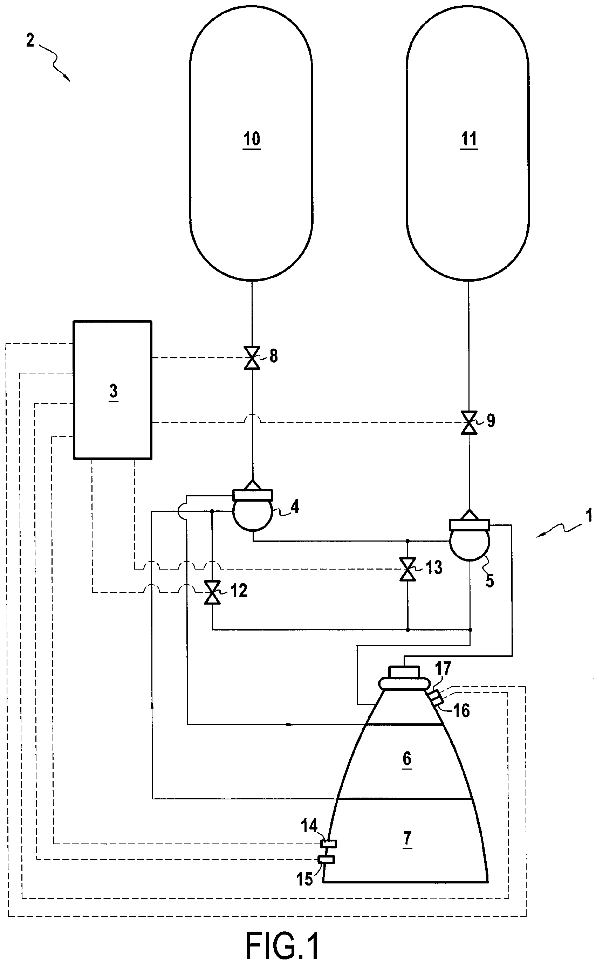

La figure 1 Illustre un moteur-fusée 1 à propergols liquides et alimentation par turbopompes, Installé dans un banc d'essais 2 dans lequel il est connecté à une unité électronique de commande 3 pour effectuer des essais suivant un profil comprenant une séquence de plusieurs paliers de fonctionnement.

Dans le mode de réalisation illustré, le moteur-fusée 1 est un moteur-fusée du type dit à cycle de détente, dans lequel les turbopompes 4, 5 sont actionnées par l'un des propergols après son passage par un échangeur de chaleur régénératif 6 adjacent aux parois de la chambre propulsive 7 du moteur-fusée 1. Des vannes d'alimentation 8, 9 sont interposées entre les réservoirs 10, 11 contenant les propergols et les turbopompes correspondantes 4, 5, et des vannes de contournement 12, 13 permettent un contournement au moins partiel de ces turbopompes 4, 5 par le propergol chauffé par l'échangeur 6. Toutefois, l'invention n'est nullement limitée aux essais de tels moteurs-fusées, et peut également être appliquée aux essais d'autres types de moteurs.

Dans le mode de réalisation illustré, le fonctionnement du moteur-fusée 1 peut être piloté par le moyen des vannes d'alimentation 8,9 et des vannes de contournement 12,13. Chacune de ces vannes est connectée pour cela à l'unité électronique de commande 3 pour recevoir des consignes de fonctionnement. Le banc d'essais 2 comprend aussi des capteurs, comme par exemple des capteurs de température 14 et de pression 15 dans la chambre propulsive 7, et des capteurs de poussée 16 et de vibration 17 dans les supports du moteur-fusée 1. Ces capteurs 14,15,16,17 sont aussi connectés à l'unité électronique de commande 3 pour lui transmettre des paramètres de fonctionnement du moteur-fusée 1. Cet ensemble de paramètres de fonctionnement X peut comprendre un premier paramètre A, un deuxième paramètre B, et ainsi de suite.

Dans ce banc d'essais 2, le moteur-fusée 1 est destiné à être soumis à des essais techniques comprenant une séquence de paliers de fonctionnement $PF_n$ afin d'évaluer les paramètres de fonctionnement X du moteur-fusée 1 captés pendant chacun de ces paliers de fonctionnement. Chaque palier de fonctionnement $PF_n$ de cette séquence

correspond à un ensemble de valeurs stables des consignes de fonctionnement du moteur-fusée 1 et cherche à reproduire des points de fonctionnement pertinents pour une utilisation normale de ce moteur-fusée 1.

Chaque palier de fonctionnement doit avoir une durée suffisante pour recueillir des valeurs représentatives des paramètres de fonctionnement X du moteur-fusée 1 lors d'un tel essai. En même temps, une durée excessive des paliers de fonctionnement, et donc de l'essai, présente des inconvénients notamment en termes de coût. Il est donc nécessaire de trouver un compromis dans la durée des paliers.

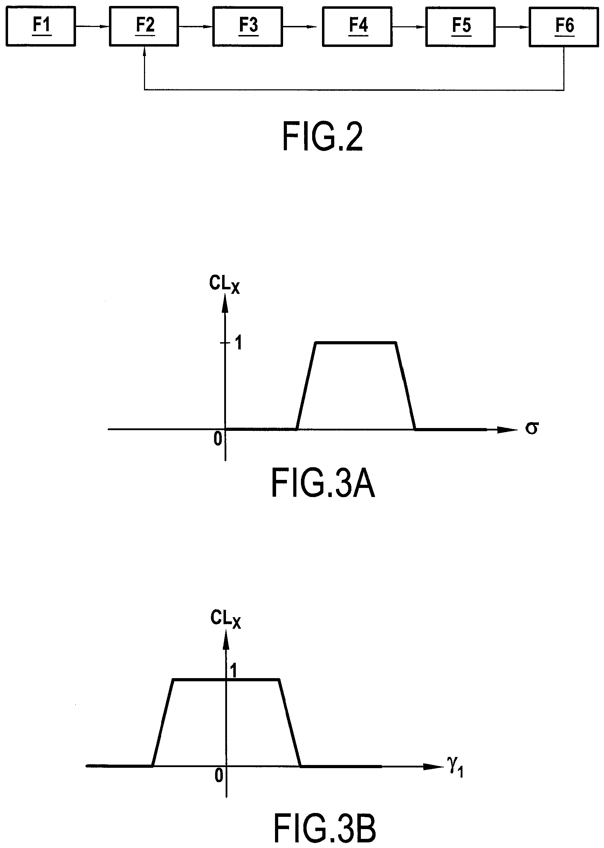

La figure 2 illustre les six principales étapes d'un procédé d'essai technique pouvant être mis en œuvre avec le système illustré sur la figure 1. Dans une première fonction F1 de ce procédé, une table comprenant des données relatives à chaque palier de fonctionnement $PF_n$ est stockée dans une mémoire (dispositif de stockage de données ou mémoire vive) de l'unité électronique de commande 3. Cette table peut notamment comprendre, pour chaque palier de fonctionnement $PF_n$, un identificateur du palier de fonctionnement $PF_n$, un premier paramètre $para_{1,n}$ indiquant une priorité assignée au palier $PF_n$, des valeurs de consignes de fonctionnement et éventuellement de seuils de surveillance du moteur-fusée 1 et/ou du banc d'essai 2, une durée maximale $t_{max,n}$ et éventuellement une durée minimale $t_{min,n}$ du palier, au moins un critère de fin de palier, chaque critère étant associé à un ensemble de paramètres physiques de fonctionnement X captés pendant le palier de fonctionnement, un seuil pour un niveau de confiance associé à chaque ensemble de paramètres de fonctionnement X associés à chaque critère de fin de palier, ainsi que des opérateurs logiques et/ou mathématiques à appliquer auxdits critères, paramètres physiques et/ou niveaux de confiance. Le paramètre $para_{1,n}$ indiquant la priorité assignée à chaque palier $PF_n$ peut, par exemple, avoir une valeur parmi les valeurs 1, 2 et 3, la valeur 1 correspondant à la plus grande priorité et la valeur 3 à la moindre priorité. Les critères de fin de palier peuvent être, par exemple, des critères de stabilité desdits paramètres de fonctionnement X échantillonnés pendant une fenêtre temporelle glissante.

Dans une deuxième fonction F2, l'unité électronique de commande 3 ordonne les paliers de fonctionnement de la table établie dans la première fonction F1 suivant la priorité accordée à chaque palier, mais en prenant compte aussi la proximité des valeurs des consignes de fonctionnement entre paliers successifs. Dans certains cas particuliers, deux ou plusieurs paliers peuvent être liés afin de garantir leur exécution dans un ordre préalablement Imposé. Cette deuxième fonction F2 est exécutée au début de l'essai technique, et ensuite répétée avant la fin de chaque palier de fonctionnement $PF_n$ afin de mettre à jour la séquence des paliers restants. Dans ce mode de réalisation, l'unité électronique de commande peut aussi prendre en compte le temps disponible jusqu'à l'épuisement des ergots disponibles dans les réservoirs 10,11.

Ainsi, par exemple, chaque palier de fonctionnement $PF_n$ peut être associé audit premier paramètre $para_{1,n}$, à un deuxième paramètre $para_{2,n}$ correspondant à sa proximité à un palier en cours, et à un troisième paramètre $para_{3,n}$ correspondant à la différence entre sa durée maximale assignée $t_{max,n}$ et la durée maximale de fonctionnement $t_{cap,n}$ pouvant être maintenue au régime associé ce palier de fonctionnement $PF_n$ avec la quantité d'ergots encore disponible dans les réservoirs 10,11.

Dans cet exemple, la valeur du deuxième paramètre $para_{2,n}$ de chaque palier restant sélectionné pour ce triage peut être calculée, par exemple, suivant la formule suivante :

$$para_{2,n} = \sqrt{\alpha_1 \cdot (p_n - p_c)^2 + \alpha_2 \cdot (RM_n - RM_c)^2}$$

dans laquelle $p_n$ et $RM_n$ représentent, respectivement, la pression de combustion et le rapport de mélange des ergots pendant ce palier de fonctionnement $PF_n$, et $p_c$ et $RM_c$ la pression et le rapport de mélange des ergots actuels dans la chambre propulsive 7, tandis que $a_1$ [ALPHA_1] et $a_2$ [ALPHA_2] sont des coefficients de pondération de ces paramètres physiques caractérisant le palier.

La valeur du troisième paramètre $para_{3,n}$ peut être calculée pour chaque palier de fonctionnement $PF_n$ restant en soustrayant la valeur de sa durée maximale assignée $t_{max,n}$ à la durée maximale de fonctionnement $t_{cap,n}$ correspondant à ce régime et à la capacité restante d'ergols.

Si pour au moins un des paliers de fonctionnement $PF_n$ restants la valeur du troisième paramètre $para_{3,n}$ est négative, indiquant ainsi que le palier en question pourra être maintenu pendant sa durée maximale assignée $t_{max,n}$ sans épuiser les ergots, le ou les paliers restants remplissant cette condition peuvent être sélectionnés et classés par ordre croissant de la somme pondérée $K_n$ du premier paramètre $para_{1,n}$ et du deuxième paramètre $para_{2,n}$ suivant la formule suivante :

$$K_n = \beta_1 \cdot para_{1,n} + \beta_2 \cdot para_{2,n}$$

dans laquelle $\beta_1$ [BETA_1] et $\beta_2$ [BETA_2] sont des coefficients de pondération de, respectivement, lesdits premier et deuxième paramètres $para_{1,n}$ et $para_{2,n}$.

Si, par contre, aucun des paliers restants ne remplit cette condition, tous les paliers restants vont être sélectionnés et classés par ordre croissant de la somme pondérée $K'_n$ des valeurs non seulement du premier paramètre $para_{1,n}$ et du deuxième paramètre $par_{2,n}$, mais aussi du troisième paramètre $para_{3,n}$, suivant la formule suivante :

$$K'_n = \beta_1 \cdot para_{1,n} + \beta_2 \cdot para_{2,n} + \beta_3 \cdot para_{3,n}$$

dans laquelle $\beta_3$ [BETA_3] est un coefficient de pondération dudit troisième paramètre $para_{3,n}$.

Dans une troisième fonction F3, l'unité électronique de commande 3 génère les consignes à transmettre au moteur-fusée 1 et/ou au banc d'essai 2, ainsi que les seuils de surveillance correspondants, sur base des données stockées dans la table pour le palier de fonctionnement $PF_n$ classé premier (c'est-à-dire, présentant la moindre valeur de la somme pondérée $K_n$ ou $K'_n$) dans le dernier classement établi par la deuxième fonction F2. Ensuite, dans la quatrième fonction F4, ces consignes sont appliquées par l'unité électronique de commande 3 pour piloter le fonctionnement du moteur-fusée 1 et/ou du banc d'essai 2.

De manière concomitante à la quatrième fonction F4, l'unité électronique de commande 3 effectue une cinquième fonction F5 de capture et traitement de paramètres physiques X associés au palier de fonctionnement $PF_n$ en cours, notamment à travers des capteurs 14 à 17. Les valeurs de ces paramètres physiques peuvent être captées avec un échantillonnage haute fréquence ou basse fréquence selon le paramètre et sa gamme de fréquence à analyser. Par exemple, pour des signaux dont la gamme d'analyse peut être inférieure à 25 Hz, il est possible d'appliquer un échantillonnage basse fréquence d'environ 100 pt/s, tandis que pour des signaux dont la gamme d'analyse peut être sensiblement supérieure à 25 Hz et même atteindre 5000 Hz, il est possible d'appliquer un échantillonnage haute fréquence d'environ 25000 pt/s.

Dans cette cinquième fonction F5, un niveau de confiance $CL_X$ entre 0 et 1 peut être associé à chaque signal correspondant à un ou plusieurs paramètres physiques X, en fonction notamment d'une fiabilité estimée du capteur et/ou d'algorithmes utilisés pour le traitement de chaque signal. La valeur de chacun de ces niveaux de confiance $CL_X$ peut être prédéterminée ou calculée en temps réel en fonction d'un niveau de bruit et/ou de biais du signal correspondant au paramètre physique associé, et/ou de la différence entre ce signal et un seuil prédéterminé. Ainsi, par exemple, on peut attribuer ledit niveau de confiance $CL_X$ à chaque signal échantillonné à basse fréquence en fonction du niveau de bruit du signal, mesuré à travers la dispersion $\sigma$ [SIGMA] du signal dans une fenêtre temporelle glissante, et à chaque signal échantillonné à haute fréquence en fonction du coefficient d'asymétrie $\gamma_1$ [LAMBDA_1] du signal dans une fenêtre temporelle glissante.

La dispersion $\sigma$ [SIGMA] d'un signal et le niveau de confiance $CL_X$ attribué à ce signal peuvent suivre, par exemple, la relation illustrée sur la figure 3A. Dans cet exemple, on n'attribue pas un niveau de confiance $CL_X$ élevé à ce signal si sa dispersion $\sigma$ [SIGMA] est trop élevée, indiquant un niveau élevé de bruit, ou, au contraire, trop réduite, indiquant une trop grande constance du signal (signal mort).

Le coefficient d'asymétrie $\gamma_1$ [LAMBDA_1] d'un signal et le niveau de confiance $CL_X$ attribué à ce signal peuvent d'autre part suivre, par exemple, la fonction illustrée sur la figure 3B. Dans cet exemple, on n'attribue pas un niveau de confiance $CL_X$ élevé à ce signal si la valeur absolue de son coefficient d'asymétrie $\gamma_1$ [LAMBDA_1] est trop élevée.

Il est également possible d'associer à un ensemble de paramètres physiques X un niveau de confiance $CL_{ensemble}$ dont la valeur est calculée par l'unité électronique de commande 3 sur base des valeurs de niveaux de confiance $CL_X$ individuellement associés à des paramètres physiques X de cet ensemble. Ce calcul peut notamment être effectué en appliquant des opérateurs de logique floue aux valeurs des niveaux de confiance $CL_X$ individuellement associés à des paramètres physiques X de cet ensemble. Parmi les opérateurs pouvant être utilisés, on compte notamment les opérateurs probabilistes, et en particulier les opérateurs t-norme et t-conorme probabilistes. Le premier correspond au produit des deux termes de l'opération, tandis que le deuxième correspond à une soustraction du produit des deux termes de l'opération à la somme des deux termes de l'opération.

Ainsi, par exemple, en appliquant l'opérateur t-norme, les niveaux de confiance $CL_A$, $CL_B$, $CL_C$ de trois signaux correspondants, respectivement, à des paramètres physiques A, B et C participant à un même critère de fin de palier sont multipliés pour obtenir le niveau de confiance $CL_{ensemble}$ associé à cet ensemble de paramètres physiques, et donc au critère de fin de palier correspondant.

Finalement, dans une sixième fonction F6, l'unité électronique de commande 3 contrôle si l'au moins un critère de fin de palier est rempli et si au moins un niveau de confiance lié à ce critère atteint un seuil minimum. Si l'au moins un critère est rempli et le niveau de confiance atteint le seuil minimum, éventuellement pendant au moins une durée minimale de temps, le palier en cours peut être finalisé et l'unité électronique de commande 3 peut retourner à la deuxième fonction F2, dans laquelle la table sera réarrangée après avoir éliminé le palier finalisé, et ensuite générer, dans la troisième fonction F3, les consignes de fonctionnement correspondant au palier suivant. La finalisation du palier en cours peut aussi être conditionnée à une durée minimale du palier, de telle manière que le palier de fonctionnement ne soit pas finalisé trop rapidement.

Par contre, si l'au moins un critère de fin de palier n'est pas rempli et/ou si l'au moins un niveau de confiance lié à ce critère n'atteint pas son seuil minimum, le palier peut être maintenu jusqu'à atteindre une durée maximale prédéterminée.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques Individuelles des différents modes de réalisation évoqués peuvent être combinées dans des modes de réalisation additionnels. Par conséquent, la description et les dessins doivent être considérés dans un sens illustratif plutôt que restrictif.

**Revendications**

1. Procédé d'essai technique d'un moteur, comprenant au moins un palier de fonctionnement correspondant à une valeur stable d'au moins une consigne de fonctionnement du moteur et/ou d'un banc d'essai du moteur, dans lequel ledit palier de fonctionnement est finalisé avant un seuil de durée maximum si un critère associé à un ensemble de paramètres physiques captés sur le moteur pendant le palier de fonctionnement est rempli et un niveau de confiance associé audit ensemble de paramètres physiques atteint au moins un seuil prédéterminé,
**caractérisé en ce que** ledit ensemble de paramètres physiques comprend une pluralité de paramètres physiques associés chacun à un niveau de confiance, le niveau de confiance associé à l'ensemble de paramètres physiques étant une fonction des niveaux de confiance associés à ladite pluralité de paramètres physiques.

2. Procédé d'essai technique suivant la revendication 1, dans lequel ledit palier de fonctionnement est finalisé avant un seuil de durée maximum si ledit critère est rempli, et ledit niveau de confiance atteint au moins ledit seuil prédéterminé, pendant au moins une durée minimale prédéterminée.

3. Procédé d'essai technique suivant l'une quelconque des revendications 1 ou 2, dans lequel ladite fonction comprend un produit des niveaux de confiance associés à deux paramètres physiques de ladite pluralité.

4. Procédé d'essai technique suivant l'une quelconque des revendications 1 à 3, dans lequel ladite fonction comprend une soustraction du produit des niveaux de confiance associés à deux paramètres physiques de ladite pluralité à une somme des mêmes deux niveaux de confiance.

5. Procédé d'essai technique suivant l'une quelconque des revendications 1 à 4, dans lequel au moins un desdits niveaux de confiance est prédéterminé.

6. Procédé d'essai technique suivant l'une quelconque des revendications 1 à 5, dans lequel au moins un niveau de confiance associé à un paramètre physique est calculé en fonction d'un niveau de bruit dans un signal correspondant au paramètre physique associé.

7. Procédé d'essai technique suivant l'une quelconque des revendications 1 à 6, dans lequel au moins un niveau de confiance associé à un paramètre physique est calculé en fonction d'un coefficient d'asymétrie d'un signal correspondant au paramètre physique associé.

8. Procédé d'essai technique suivant l'une quelconque des revendications 1 à 7, dans lequel au moins un niveau de confiance associé à un paramètre physique est calculé en fonction d'une différence entre une valeur du paramètre physique associé et un seuil prédéterminé.

9. Procédé d'essai technique suivant l'une quelconque des revendications 1 à 8, dans lequel chacun desdits niveaux de confiance a une valeur entre 0 et 1.

10. Procédé d'essai technique suivant l'une quelconque des revendications précédentes, comprenant une séquence d'une pluralité de paliers de fonctionnement différents correspondant chacun à une valeur stable d'au moins une consigne de fonctionnement d'un moteur soumis à l'essai et/ou d'un banc d'essai du moteur.

11. Procédé d'essai technique suivant la revendication 10, dans lequel l'ordre des paliers de fonctionnement dans ladite séquence est établi sur base au moins d'une priorité assignée à chaque palier de fonctionnement, et des valeurs de l'au moins une consigne de fonctionnement correspondant à la pluralité de paliers de fonctionnement.

12. Procédé d'essai technique suivant l'une quelconque des revendications précédentes, dans lequel ledit moteur est un moteur-fusée (1) à ergols liquides.

13. Procédé d'essai technique suivant la revendication 12, dans lequel ledit moteur-fusée (1) à ergols liquides comprend un système d'alimentation par turbopompe.

14. Unité électronique de commande (3) avec au moins une sortie de données pour transmettre au moins une consigne de fonctionnement à un moteur et/ou à un banc d'essais (2) dudit moteur, configurée pour commander un essai technique du moteur suivant le procédé de l'une quelconque des revendications 1 à 13.

15. Support informatique contenant un ensemble d'instructions exécutables par un système informatique pour effectuer un procédé d'essai technique suivant l'une quelconque des revendications 1 à 13.

**Patentansprüche**

1. Technisches Prüfverfahren eines Motors, umfassend mindestens eine Betriebsstufe, die einem stabilen Wert von mindestens einem Betriebssollwert des Motors und/oder einem Prüfstand des Motors entspricht, wobei die Betriebsstufe vor einem maximalen Schwellendauerwert abgeschlossen wird, wenn ein Kriterium, das einem Satz von physikalischen Parametern zugeordnet ist, die auf dem Motor während der Betriebsstufe erfasst werden, erfüllt ist und ein Konfidenzniveau, das dem Satz von physikalischen Parametern zugeordnet ist, mindestens einen vorbestimmten Schwellenwert erreicht,
**dadurch gekennzeichnet, dass** der Satz von physikalischen Parametern mehrere physikalische Parameter umfasst, die jeweils einem Konfidenzniveau zugeordnet sind, wobei das Konfidenzniveau, das dem Satz von physikalischen Parametern zugeordnet ist, eine Funktion von Konfidenzniveaus ist, die den mehreren physikalischen Parametern zugeordnet sind.

2. Technisches Prüfverfahren nach Anspruch 1, wobei die Betriebsstufe vor einem maximalen Schwellendauerwert abgeschlossen wird, wenn das Kriterium erfüllt ist, und das Konfidenzniveau mindestens den vorbestimmten Schwellenwert während mindestens einer vorbestimmten Mindestdauer erreicht.

3. Technisches Prüfverfahren nach einem der Ansprüche 1 oder 2, wobei die Funktion ein Produkt aus Konfidenzniveaus umfasst, die zwei physikalischen Parametern der mehreren zugeordnet sind.

4. Technisches Prüfverfahren nach einem der Ansprüche 1 bis 3, wobei die Funktion eine Subtraktion des Produkts der Konfidenzniveaus, die zwei physikalischen Parametern der mehreren zugeordnet sind, von einer Summe der gleichen zwei Konfidenzniveaus umfasst.

5. Technisches Prüfverfahren nach einem der Ansprüche 1 bis 4, wobei mindestens eines der Konfidenzniveaus vorbestimmt ist.

6. Technisches Prüfverfahren nach einem der Ansprüche 1 bis 5, wobei mindestens ein Konfidenzniveau, das einem physikalischen Parameter zugeordnet ist, in Abhängigkeit eines Geräuschniveaus in einem Signal, das dem zugeordneten physikalischen Parameter entspricht, berechnet wird.

7. Technisches Prüfverfahren nach einem der Ansprüche 1 bis 6, wobei mindestens ein Konfidenzniveau, das einem physikalischen Parameter zugeordnet ist, in Abhängigkeit eines Asymmetriekoeffizienten eines Signals, das dem zugeordneten physikalischen Parameter entspricht, berechnet wird.

8. Technisches Prüfverfahren nach einem der Ansprüche 1 bis 7, wobei mindestens ein Konfidenzniveau, das einem physikalischen Parameter zugeordnet ist, in Abhängigkeit von einer Differenz zwischen einem Wert des zugeordneten physikalischen Parameters und einem vorbestimmten Schwellenwert berechnet wird.

9. Technisches Prüfverfahren nach einem der Ansprüche 1 bis 8, wobei jedes der Konfidenzniveaus einen Wert zwischen 0 und 1 aufweist.

10. Technisches Prüfverfahren nach einem der vorhergehenden Ansprüche, umfassend eine Sequenz aus mehreren verschiedenen Betriebsstufen, die jeweils einem stabilen Wert von mindestens einem Betriebssollwert eines Motors entsprechen, welcher der Prüfung und/oder einem Prüfstand des Motors unterzogen wird.

11. Technisches Prüfverfahren nach Anspruch 10, wobei die Reihenfolge der Betriebsstufen in der Sequenz auf Grundlage von mindestens einer Priorität, die jeder Betriebsstufe zugewiesen wird, und Werten des mindestens einen Betriebssollwertes entsprechend den mehreren Betriebsstufen festgelegt wird.

12. Technisches Prüfverfahren nach einem der vorhergehenden Ansprüche, wobei der Motor ein Raketenmotor (1) mit Flüssigtreibstoff ist.

13. Technisches Prüfverfahren nach Anspruch 12, wobei der Raketenmotor (1) mit Flüssigtreibstoff ein Turbopumpenversorgungssystem umfasst.

14. Elektronische Steuereinheit (3) mit mindestens einem Datenausgang zum Übertragen von mindestens einem Betriebssollwert auf einen Motor und/oder einen Prüfstand (2) des Motors, die dazu ausgestaltet ist, eine technische Prüfung des Motors nach dem Verfahren nach einem der Ansprüche 1 bis 13 zu steuern.

15. Datenträger, der einen Satz von Anweisungen enthält, die durch ein Informatiksystem ausführbar sind, um ein technisches Prüfverfahren nach einem der Ansprüche 1 bis 13 zu bewirken.

**Claims**

1. A technical test method for testing an engine, the method comprising at least one operating stage corresponding to a stable value of at least one operating setpoint for the engine and/or for a test bench for testing the engine, wherein said operating stage is finalized before a maximum duration threshold if a criterion associated with a set of physical parameters picked up on the engine during the operating stage is satisfied and a confidence level associated with said set of physical parameters reaches at least a predetermined threshold, **characterized in that** said set of physical parameters comprises a plurality of physical parameters each associated with a respective confidence level, the confidence level associated with the set of physical parameters as a whole being a function of the confidence levels associated with said plurality of physical parameters.

2. A technical test method according to claim 1, wherein said operating stage is finalized prior to a maximum duration threshold if said criterion is satisfied and said confidence level reaches at least said predetermined threshold for at least a predetermined minimum duration.

3. A technical test method according to any one of claims 1 or 2, wherein said function comprises the product of multiplying together the confidence levels associated with two physical parameters of said plurality.

4. A technical test method according to any one of claims 1 to 3, wherein said function comprises subtracting the product of multiplying together the confidence levels associated with two physical parameters of said plurality from the sum of the same two confidence levels.

5. A technical test method according to any one of claims 1 to 4, wherein at least one of said confidence levels is predetermined.

6. A technical test method according to any one of claims 1 to 5, wherein at least one confidence level associated with a physical parameter is calculated as a function of a noise level in a signal corresponding to the associated physical parameter.

7. A technical test method according to any one of claims 1 to 6, wherein at least one confidence level associated with a physical parameter is calculated as a function of an asymmetric uncertainty coefficient of a signal corresponding to the associated physical parameter.

8. A technical test method according to any one of claims 1 to 7, wherein at least one confidence level associated with a physical parameter is calculated as a function of a difference between a value of the associated physical parameter and a predetermined threshold.

9. A technical test method according to any one of claims 1 to 8, wherein each of said confidence levels has a value lying in the range 0 to 1.

10. A technical test method according to any preceding claim, comprising a sequence of a plurality of different operating stages, each corresponding to a stable value of at least one operating setpoint for an engine subjected to testing and/or a test bench for the engine.

11. A technical test method according to claim 10, wherein the order of the operating stages in said sequence is established on the basis of at least one priority assigned to each operating stage, and of values for the at least one operating setpoint corresponding to the plurality of operating stages.

12. A technical test method according to any one of the previous claims, wherein said engine is a liquid-propellant rocket-engine (1).

13. A technical test method according to claim 12, wherein said liquid-propellant rocket-engine (1) includes a turbopump feed system.

14. An electronic control unit (3) having at least one data output for transmitting at least one operating setpoint to an engine and/or to a test bench (2) for testing said engine, the unit being configured to control a technical test of the engine in application of the method according to any one of claims 1 to 13.

15. A data medium containing a set of instructions executable by a computer system to perform a technical test method according to any one of claims 1 to 13.

FIG.1

FIG.2

FIG.3A

FIG.3B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2751410 A1